Europäisches Patentamt

European Patent Office

Office européen des brevets

(19)

(11) Publication number: **0 230 375 B1**

# EUROPEAN PATENT SPECIFICATION

(12)

(45) Date of publication of patent specification: **08.01.92** (51) Int. Cl.⁵: **G11B 33/02, G11B 17/04**

(21) Application number: **87300303.2**

(22) Date of filing: **14.01.87**

(54) Disc player.

(30) Priority: **14.01.86 JP 425461/86**

(43) Date of publication of application:
**29.07.87 Bulletin 87/31**

(45) Publication of the grant of the patent:
**08.01.92 Bulletin 92/02**

(84) Designated Contracting States:
**DE FR GB IT**

(56) References cited:
**EP-A- 0 143 554**
**GB-A- 2 087 128**
**GB-A- 2 134 693**
**JP-A-61 206 993**

**PATENT ABSTRACTS OF JAPAN, vol. 9, no.
314 (P-412)[2037], 10th December 1985; & JP-
A-60 143 475 (MATSUSHITA DENKI SANGYO
K.K.) 29-07-1985**

**PATENT ABSTRACTS OF JAPAN, vol. 11, no.
37 (P-543)[2484], 4th February 1987; & JP-
A-61 206 992 (HITACHI LTD) 13-09-1986**

**PATENT ABSTRACTS OF JAPAN, vol. 11, no.
328 (P-629)[2775], 27th October 1987; & JP-
A-62 110 664 (MATSUSHITA ELECTRIC IND.**

**CO., LTD) 21-05-1987**

(73) Proprietor: **SHINTOM KABUSHIKI KAISHA
19-1 Minowacho 2-chome Kouhoku-ku
Yokohama-shi Kanagawa(JP)**

(72) Inventor: **Akiyama, Tsuneo c/o Shintom
Kabushiki Kaisha
19-1 Minowacho 2-chome Kouhoku-ku
Yokohama-shi Kanagawa(JP)**

(74) Representative: **Hall, Graeme Keith et al
Frank B. Dehn & Co. Imperial House 15-19
Kingsway
London WC2B 6UZ(GB)**

## Description

The present invention relates to front loading type disk players, and particularly to means for opening and closing a disk insertion opening through which a disk in a jacket is received into a disk player.

In an apparatus that receives regenerative signals from a disk carrying information in the form of a binary code that can be optically read, such as video disk players (VD) and audio compact disk players (CD), several types of regenerative modes are known; a type wherein a disk assembly placed in a transparent jacket is received, and the information from the disk rotated in the jacket is read through the transparent jacket, a type wherein only a disk is received and the information is read from the disk directly, and a type wherein a disk is automatically removed from the jacket in the player before regeneration is carried out. In the player of the last-mentioned type, the jacket is not necessarily transparent, and when the disk is removed from the jacket, the jacket may be removed from the player. In any disk player of these types, front loading is common, and where an opaque or transparent record jacket having a disk therein is to be inserted into the player, the player has, in the front panel of the player, a relatively large insertion opening capable of receiving the jacket. With such a machine there is a risk that things other than a jacketed disc having a predetermined size will be inserted into the insertion opening, for example an unjacketed disk may be inadvertently inserted, causing damage to the record surface of the unjacketed disk, or causing the unjacketed disk to be unremovable from the player, which puts the player out of order.

To prevent things other than a predetermined disk in a jacket from being inserted into a disk insertion opening, it has been suggested that a lid be provided to the insertion opening.

In Japanese Patent Application Laid-Open No.60-55547, issued on March 30, 1985, a player is disclosed that is provided with a first closure member and a second closure member, the first member being opened or closed by a driving mechanism such as an electric motor, wherein when the first member is opened, the second member is pushed by a jacket inserted through the first member and is opened. However since the operating switch of the driving mechanism for opening the first member must be turned on, prior to the insertion of the disk in a jacket, insertion is a troublesome operation. Furthermore, after the first member is opened, since the second member is opened when it is simply pushed, this suggestion does not prevent objects other than jacketed discs from being inserted.

Therefore it would be desirable to provide a disk player having a disk insertion opening with a closure member that acts as a gate for allowing only a disk in a jacket having a predetermined size to be passed. One approach to this problem is disclosed in JP-A-60 143475 which disclosed the preamble of claim 1.

According to the present invention, there is provided a disc player adapted to receive a disc jacket having a disc therein, wherein said player comprises an insertion opening for said jacket, a closure member movable between a position in which said insertion opening is closed and a position in which a jacket may be passed therethrough, said closure member being normally biassed into said closed position, and means for locking said closure member in said closed position, said locking means comprising two fingers defining a slot for engaging said closure member, and cam follower means whereby when a jacket is to be inserted through said opening the jacket engages said cam follower means and acts on said locking means to unlock said closure member to allow said closure member to be opened, characterised in that said fingers are supported on support means by a slidable, but non-rotatable, connecting piece, said cam follower means being formed by a slope on said locking means whereby upon engagement with a corner of a said jacket said fingers are slid out of engagement with said closure member.

Thus, at least in preferred embodiments of the present invention, a disk player is provided wherein a jacket itself acts as a key to a closure member of a disk insertion opening so that if a record jacket to be inserted into the disk insertion opening has a predetermined size, a lock of the closure member that closes the insertion opening is released, and the member is opened upon insertion of the jacket, while if a record jacket different in size from a predetermined size or an unjacketed disk is to be inserted, the member that is closed will not be released so that insertion of a record jacket different in size from a predetermined size or an unjacketed disk may be prevented.

An embodiment of the invention will now be described by way of example and with reference to the accompanying drawings, in which:-

Fig.1 is a perspective view of a disk player having a front panel with a disk insertion opening,

Fig.2 is a perspective view of the back section of the front panel shown in Fig.1,

Fig.3 is a side view of the same section as shown in Fig.2 but seen from a different angle, and

Figs.4 and 5 are cross-sectional views of the disk insertion opening with a disk in a jacket being just before insertion in Fig.4, and with the disk in a jacket being inserted into the disk insertion opening in Fig.5.

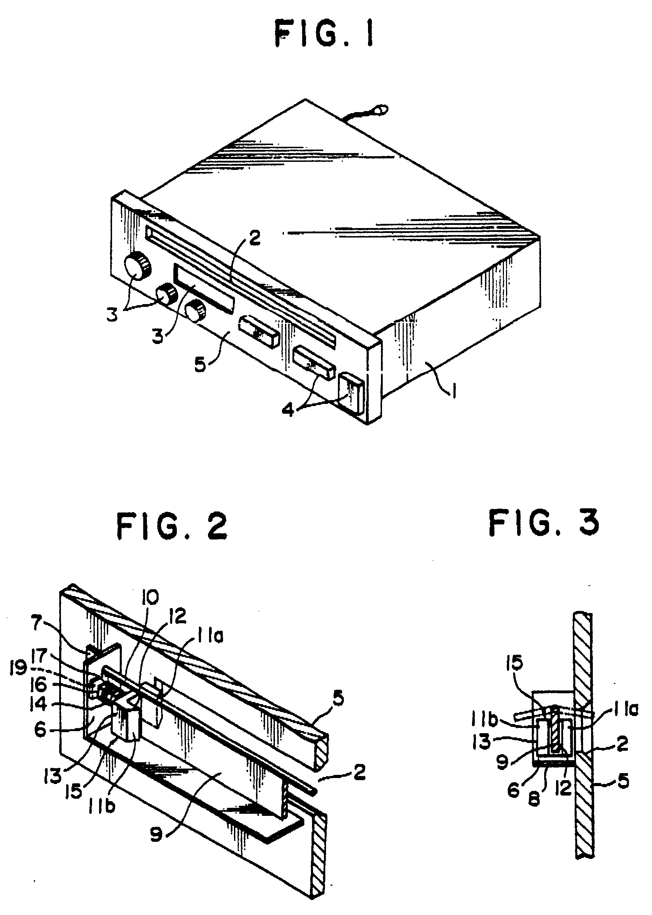

Referring to Fig.1, a housing 1 including a front panel 5 with an elongate disk insertion opening 2 for receiving a disk in a known jacket is illustrated. The front panel 5 is provided with several operating dials 3 and indicators or displays 4, which are well known and are not the subject matter of the present invention.

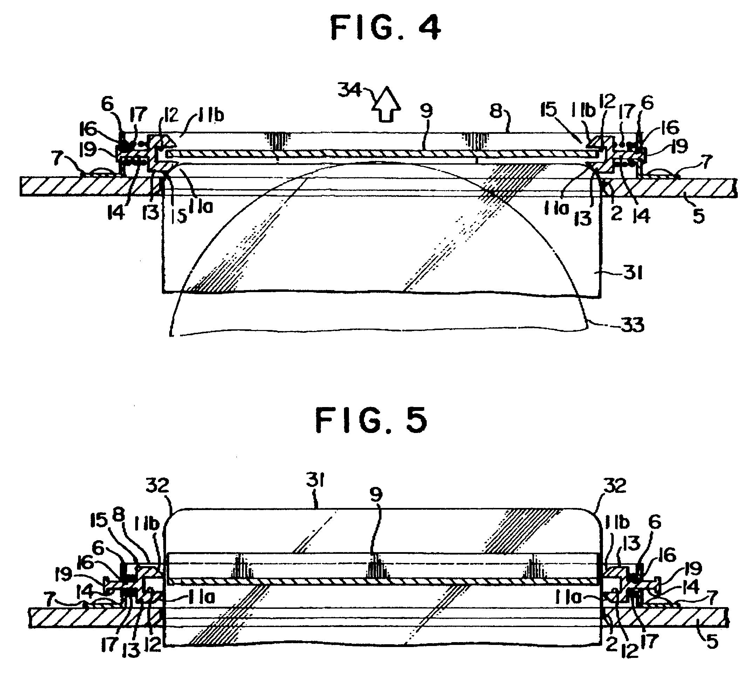

Fig.2 illustrates the back of the front panel 5 seen from the inside of the housing I and corresponds to one side of the whole arrangement shown in Figs.4 and 5.

A closure member 9 in the shape of a horizontally elongate plate adapted to the disk insertion opening 2 is situated inside the disk insertion opening 2. On the back of the front panel 5, a bracket generally designated 8 is fixed, and the member 9 is attached to a shaft I0 rotatably supported by the bracket 8. The bracket 8 extends horizontally along the lower section of the disk insertion opening 2 and the opposite ends of the bracket 8 are formed with support plate sections 6 and mounting flange sections 7. The mounting flange sections 7 are screwed firmly to the back surface of the front panel 5, and the support plate sections 6 are bent at right angles from the flange sections 7 adjacent thereto and are opposed to each other extend vertically.

The opposed support plate sections 6 support pivotally the member 9 via the shaft I0 mentioned above and also support lock means in the form of control members I5 for controlling movement of the member 9. Although, according to the illustrated embodiment, the control members I5 are situated on the opposite sides of the member 9 respectively, the control members I5 being identical, in some cases it is possible to provide only one control member. Normally, the closure member 9 is provided with a spring (not shown) in a known manner to bias the member 9 to a position where the disk insertion opening 2 is closed. Each control member I5 includes a pair of fingers I3 defining a slot I2 engageable with the side edge of the closure member 9 in the closed position. Each control member I5 is operably supported by a rod I4 engaged with the support plate section 6, and is normally biassed to a position, where the slot I2, defined by the pair of fingers I3, is engaged with the side edge of the lid member 9, by the force of a spring I7 arranged around the rod I4 between the support plate section 6 and the control member I5. The rod I4 supporting the control member I4 has a noncircular cross section and is engaged with a bearing hole I6 that is formed in the support plate section 6 and is in conformity with the crosssectional shape of the rod I4. The rod I4 is prevented by its head I9 from coming off from the support plate section 6. As a result, although the control member I5 can be slid longitudinally of the rod I4, the rod I4 is supported in an unrotational state. The ends of the fingers I3 are formed with slopes IIa and IIb respectively, and the end of the slope IIa of the finger located on the side of the disc insertion opening 2 is normally positioned to extend inwardly a little toward the insertion opening 2. The slopes IIa, IIb are oriented to act as cam followers for giving the control member I5 a component of force so that the control member I5 may be retracted against the reaction force of the spring I7 when the slants IIa, IIb receive a force normal to the axis of the rod I4 in the imaginary plane passing through the axis of the rod I4.

Referring to Fig.5 together with Fig.4, although not restrictive, the present invention is suitable for a disk player of a type where use is made of a media having a disk 33 in a transparent record jacket 3I. In this type of a player, the disk 33 held in the record jacket 3I is inserted into the player with the disk 33 in the jacket 3I, then only the disk 33 is rotated with this state kept, and information is regenerated from the disk 33 through the transparent jacket 3I. In this case, prior to the regeneration, if the predetermined jacket 3I having the disk therein is inserted into the disk insertion opening 2 in the direction shown by arrow 34, each corner section 32 of the jacket 3I engages with the slopes IIa formed on one finger I3 of the control members I5, the slopes extending inwardly into the disk insertion opening 2, and when the jacket 3I is further moved into the player, a component of the pressing force is applied on the control member I5 which is retracted in the axial direction of the rod I4 against the reaction force of the spring I7. As a result, the lock of the closure member 9 formed by each pair of fingers I3 defining the slot I2, is released, and the member 9 is forcibly opened by the jacket 3I thereby allowing the jacket 3I to be passed through. When the jacket 3I having the disk therein is inserted completely into the player, the closure member 9 is returned to the normal position due to the closing bias described above, and the control member I5 is returned to the normal position where the closure member 9 is locked by the reaction force of the spring I7. Then a regeneration of information is carried out in a known manner, and after completion of the regeneration, the jacket 3I having the disk therein is moved toward the outlet by action of a known ejector in such a manner that corner sections of the jacket 3I located opposite to the corner sections mentioned above are engaged with the slopes IIb formed on the other fingers I3 of the control member I5, the lock to the closure member 9 by the control member I5 is released in a similar way to the case of the insertion of the jacket described above, and the member 9 is opened toward the insertion opening 2 thereby allowing the jacket 3l to be removed.

If an attempt is made to insert a jacket having a size different from the predetermined size or a disk without a jacket is to be inserted into the disk insertion opening 2, the engagement thereof with the slopes lla of the fingers l3 of the control members l5 extending a little into the insertion opening 2 would not take place, so that the lock of the closure member 9 by the control members l5 is not released and therefore the closure member 9 prevents other jackets or unjacketed disks other than the jacket 3l having a predetermined size from being inserted.

While a preferred embodiment of the present invention has been described, it should be understood that the embodiment is intended to be illustrative only and changes and modifications may be made. In particular, although, in the embodiment, the fingers have slopes that act as cam followers for actuating the lock means or stopper means, other fingers having slopes similar to those slopes can be provided.

## Claims

1. A disc player adapted to receive a disc jacket (31) having a disc (33) therein, wherein said player comprises an insertion opening (2) for said jacket (31), a closure member (9) movable between a position in which said insertion opening (2) is closed and a position in which a jacket (31) may be passed therethrough, said closure member (9) being normally biassed into said closed position, and means (15) for locking said closure member in said closed position, said locking means (15) comprising two fingers (13) defining a slot (12) for engaging said closure member (9), and cam follower means (11) whereby when a jacket (31) is to be inserted through said opening (2) the jacket (31) engages said cam follower means (11) and acts on said locking means (15) to unlock said closure member (9) to allow said closure member (9) to be opened, characterised in that said fingers (13) are supported on support means by a slidable, but non-rotatable, connecting piece (14), said cam follower means being formed by a slope (11) on said locking means (15) whereby upon engagement with a corner (32) of a said jacket (31) said fingers (13) are slid out of engagement with said closure member (9).

2. A disc player as claimed in claim 1 wherein said connecting piece comprises a shaft (14) having a noncircular cross-section and said support means comprises a bearing for slidably, but not rotatably, supporting said shaft (14).

3. A disc player as claimed in claim 1 or 2 wherein said slope (11) defining said cam follower means is formed on each said finger (13).

4. A disc player as claimed in any preceding claim wherein said closure member (9) is pivotally supported about an axis extending the length of said insertion opening (2), and said locking means (15) is provided in a position wherein said closure member (9) is engaged at one end.

## Revendications

1. Lecteur de disques destiné à recevoir une pochette (31) ayant un disque (33) à l'intérieur, dans lequel le lecteur comporte une ouverture (2) d'introduction de la pochette (31), un organe (9) de fermeture déplaçable entre une position dans laquelle l'ouverture d'introduction (2) est fermée et une position dans laquelle une pochette (31) peut passer dans cette ouverture, l'organe de fermeture (9) étant normalement rappelé en position fermée, et un dispositif (15) de blocage de l'organe de fermeture en position fermée, le dispositif de blocage (15) comprenant deux doigts (13) délimitant une fente (12) destinée à coopérer avec l'organe de fermeture (9), et un dispositif (11) formant toucheau de came de manière que, lorsqu'une pochette (31) doit être introduite par l'ouverture (2), la pochette (31) coopère avec le dispositif (11) formant toucheau de came et agisse sur le dispositif de blocage (15) en débloquant l'organe de fermeture (9) afin de permettre l'ouverture de cet organe de fermeture (9), caractérisé en ce que les doigts (13) sont supportés sur un dispositif de support par l'intermédiaire d'une pièce (14) coulissante,mais non rotative, de connexion, le dispositif formant toucheau de came étant formé par une surface inclinée (11) réalisée sur le dispositif de blocage (15), si bien que, par coopération avec un coin (32) d'une pochette (31), les doigts (13) glissent en étant écartés de l'organe de fermeture (9).

2. Lecteur de disques selon la revendication 1, dans lequel la pièce de raccordement comporte un arbre (14) ayant une section non circulaire et le dispositif de support comprend un palier supportant l'arbre (14) de manière qu'il puisse coulisser mais qu'il ne puisse pas tourner.

3. Lecteur de disques selon la revendication 1 ou 2, dans lequel la surface inclinée (11) délimitant le dispositif formant toucheau de came est formée sur chaque doigt (13).

4. Lecteur de disques selon l'une quelconque des revendications précédentes, dans lequel l'organe de fermeture (9) est supporté de manière articulée autour d'un axe disposé suivant la longueur de l'ouverture (2) d'introduction, et le dispositif de blocage (15) a une position dans laquelle l'organe de fermeture (9) est retenu par une extrémité.

**Patentansprüche**

1. Plattenspieler, geeignet zur Aufnahme einer PlattenUmhüllung (31) mit einer Platte (33) darin, der Plattenspieler umfassend:

eine Einführöffnung (2) für die Umhüllung (31),

ein Verschlußglied (9), welches zwischen einer Stellung, in welcher die Einführöffnung (2) geschlossen ist, und einer Stellung, in welcher eine Umhüllung (31) dadurch hindurch geführt werden kann, bewegbar ist, wobei das Verschlußglied (9) normalerweise in die geschlossene Stellung vorgespannt ist, und

ein Mittel (15) zum Verriegeln des Verschlußglieds in der geschlossenen Stellung, wobei das Verriegelungsmittel (15) zwei, einen Schlitz (12) festlegende Finger (13) zum Eingriff mit dem Verschlußglied (9) und Nockenfolgermittel (11) umfasst, wodurch, wenn eine Umhüllung (31) durch die Öffnung (2) eingeführt werden soll, die Umhüllung (31) in Eingriff mit den Nockenfolgermitteln (11) gelangt und auf das Verriegelungsmittel (15) einwirkt, um das Verschlußglied (9) zu entriegeln, um ein Öffnen des Verschlußglieds (9) zu ermöglichen,

**dadurch gekennzeichnet,**

daß die Finger (13) an einem Halterungsmittel durch ein verschiebbares, aber nicht drehbares Verbindungsteil (14) gehaltert sind, wobei die Nockenfolgermittel von einer Abschrägung (11) an dem Verriegelungsmittel (15) gebildet sind, wodurch die Finger (13) nach Eingriff mit einer Ecke (32) der Umhüllung (31) außer Eingriff mit dem Verschlußglied (9) geschoben werden.

2. Plattenspieler nach Anspruch 1, bei welchem das Verbindungsteil einen Schaft (14) mit nicht-kreisförmigem Querschnitt umfaßt und das Halterungsmittel ein Lager zum verschiebbaren, aber nicht drehbaren Haltern des Schafts (14) unfaßt.

3. Plattenspieler nach Anspruch 1 oder 2, bei welchem die Abschrägung (11), welche die Nockenfolgermittel festlegt, an jedem der Finger (13) ausgebildet ist.

4. Plattenspieler nach einem der vorhergehenden Ansprüche, bei welchem das Verschlußglied (9) um eine sich in Langsrichtung der Einführöffnung (2) erstreckende Achse schwenkbar gehaltert ist und das Verriegelungsmittel (15) an einer Position vorgesehen ist, in der es an einem Ende in Eingriff mit dem Verschlußglied (9) ist.

# FIG. 1

# FIG. 2

# FIG. 3

# FIG. 4

# FIG. 5

EP 0 230 375 B1